# EUROPEAN PATENT SPECIFICATION

(11) **EP 3 267 932 B1**
(45) Date of publication and mention of the grant of the patent: **31.10.2018**
(21) Application number: 16718460.5
(22) Date of filing: 11.03.2016
(51) Int. Cl.: A61C 8/00

(54) **DENTAL PROSTHESIS**
ZAHNPROTHESE
PROTHÈSE DENTAIRE

(30) Priority: 11.03.2015 ES 201530311
(43) Date of publication of application: 17.01.2018
(73) Proprietor: Sweden & Martina S.p.A., 35020 Due Carrare (PD) (IT)
(72) Inventor: RODRIGUEZ CIURANA, Javier A., 35141 Padova (IT); SEGALA TORRES, Isabel, 35141 Padova (IT); VELA NEBOT, Javier, 35141 Padova (IT)
(74) Representative: Vinci, Marcello
(86) International application number: PCT/IB2016/051390
(87) International publication number: WO 2016/142912

(56) References cited:
- CN-U- 203 493 758
- FR-A1- 2 806 291
- US-A- 5 281 140
- US-A- 5 888 066
- US-A1- 2008 241 789
- US-A1- 2011 200 969

## Description

The present invention concerns the dental sector, more particularly the sector of dental prostheses placed on implants. The present invention concerns, in particular, a dental prosthesis.

A prosthesis on implant consists in the placing of a dental prosthesis by means of an implant, for the purpose of obtaining a good aesthetic and functional result of the prosthesis or crown and of the tissues surrounding it. It is constituted by three functional parts: the implant, the post and core and the crown or prosthesis. Usually, each functional part corresponds to an independent element. The implant is introduced in the bone in order to provide a support for the post and core, which has the function of joining the implant with the crown. The post and core usually remains fixed to the implant by means of a thread and the crown can be joined to the post and core by means of a thread or through cementation. In the case of the prosthesis that is the subject of the present invention, the crown is preferably joined to the post and core through cementation.

The crowns placed on post and cores of the known type, both the cemented and the threaded ones, are designed in such a way that they rest on a margin or shoulder of the post and core. The margin is delimited within the post and core and consists of a supporting surface for the crown that is placed on the same. It constitutes a transition section between the diameter of the implant and the diameter of the crown and is located exactly at the level of the gum, so that the post and core is not visible. Since the gum healing process is rather slow, it is necessary to wait at least 3 months before being able to place the post and core definitively, as any slight recession would make the post and core visible and expose it to the bacteria present in the mouth.

The existence of a margin involves, on one hand, the impossibility to place the crown definitively at the same time as the implant and the need to wait for a long time before placing the crown definitively.

The healing of the gum around the post and core is of the type by secondary intention. This type of healing is characterized by a considerable contraction of the tissues due to myofibroblasts. The contraction of the tissues forces the gum to move towards a point in which the diameter of the post and core is smaller. The prostheses with margin or shoulder make it necessary for the profile of the post and core to diverge from the base. This forces the fibres of the tissue to stabilize at a lower level, with the risk of the post and core becoming exposed due to the fact that it has a smaller diameter.

Furthermore, all the prostheses (crowns) with margin or shoulder at least make it necessary to disconnect the post and core in order to place the final tooth with the defined margin. The disconnection of the post and core is the factor that causes the most accentuated gingival recession.

In standard post and cores, the diameter diverges from the highest point of the implant towards the lowest point of the crown, and therefore the smaller diameter is positioned at the base of the post and core, so that the gum tends to move towards the implant. This makes this type of post and cores less satisfying in terms of aesthetic appearance and also reduces their capacity to insulate the gum. If the insulation provided is not good, bacteria penetrate easily into the inner area, causing infections.

The tissue that remains in contact with the post and core in its area closest to the implant is called connective tissue. Post and cores have the function of holding the fibres of said connective tissue in order to stabilize the gum and insulate the implant from the contaminating environment of the mouth. For this purpose, the known post and cores are provided with a series of grooves in the area of the post and core that is closest to the implant. For example, the US patent US20110200969A1 describes a set of micro grooves that can be arranged with a certain inclination. However, the geometry of said micro grooves existing in the state of the art does not allow the regenerative capacity of the connective tissue to be fully exploited.

The prosthetic post and core incorporated in the dental prosthesis that is the subject of the present invention has the purpose to obtain better results than the known post and cores, in terms of both aesthetical appearance and biological functionality.

The present invention practically describes a dental prosthesis according to the appended claims.

The present invention is not limited to cylindrical or conical shapes, meaning shapes with circular cross section. In the present application the word "diameter" must be understood widely, including the so-called hydraulic diameter or equivalent diameter for non-circular geometric shapes.

The diameter of said portion protruding from said implant converges in a continuous manner from said implant towards said crown, and does not increase. Optionally, the diameter converges with an angle of convergence included between 1° and 6°. More preferably, the diameter converges with an angle of convergence equal to 2°.

During the first week, and part of the second, after the implant with the post and core has been placed the fibres increase in number. At the beginning, most of the fibres have a certain elasticity. The type of wound that is produced by perforating the gum is a wound healing by secondary intention. This means that starting from the second week part of the fibroblasts are transformed into myofibroblasts, which have the capacity to contract. Being arranged in a circular shape, and due to their tendency to contract, myofibroblasts tend to be positioned in the area of the post and core with smaller diameter. Thanks to the decrease in the diameter of the post and core, the area with smaller diameter is located at the limit of the crown, rather than in the implant as is the case with the known post and cores.

The fact that the diameter of the post and core decreases from the implant towards the crown is not sufficient to ensure that the gum heals far from the implant. The crown can be positioned in the post and core in such a way that it is very near the implant and that the distance between the implant and the crown is very small or null. A crown with its lower part far from the highest part of the implant causes an accumulation of tissue further away from the implant. This ensures good insulation of the implant and a larger quantity of tissue, which improves the aesthetical appearance of the crown.

The fact that the converging inclination starts from the base is important, since tissues always regenerate starting from the innermost part, meaning the lowest part. In order for the above to take place, the base of the post and core must be positioned slightly under the surface, meaning that the implant must be inserted not too deep into the bone.

This improvement, furthermore, takes in consideration the possibility to improve the aesthetical result of a late gingival recession, as it is possible to change the crown of the prosthesis with no need to disconnect the post and core. Preferably, said crown can be fixed to said post and core through cementation and said post and core has no margins.

Since there is no need for margins, it is possible to place it at the same time as the implant and thus avoid any disconnection.

A unique characteristic that is typical of this post and core lies in that the crowns it supports must be different and not depend on the margin of the crown that rests on the margin of the post and core. This factor facilitates the formation of a short joining piece of epithelium. This aspect is important, as one of the main differences with respect to the tissues that surround teeth and implants lies in that the epithelium of the implants is longer and has a higher tendency to recession. By using these post and cores, without disconnecting the prosthesis, it is possible to obtain a shorter piece of epithelium compared to the rest of the known prostheses, as well as a thicker and more stable connective tissue.

Said post and core is provided with a microscopic or micrometric ascending thread that starts from the part of said portion projecting from said implant that is closest to the implant itself. Optionally, the width of said microscopic thread is included between 4 µm and 40 µm, preferably it is equal to 20 µm. As a further option, the depth of said microscopic thread is included between 4 µm and 40 µm, preferably it is equal to 20 µm.

The fibres of connective tissue (1-20 microns in diameter) start to surround the post and core according to a circular pattern, as the post and core is circular. Said fibres are produced by the fibroblasts. The maximum diameter of a fibre (20 microns) will determine the depth and width of the micro threads.

The tissues always regenerate starting from the deepest part and moving towards the surface. The presence of a continuous thread facilitates the movement of the fibres from the deepest part of the post and core to the most exposed area of the same. The size of the thread is smaller than that known in the art. This means that there will be less space for the proliferation of bacteria. Also the depth is reduced, and therefore the vasa of the connective tissue are able to fight against infections.

In any case, it is the epithelium that has the function of physically stopping the passage of bacteria, and this is at a further level, thanks to the type of crown on implant that is produced without margins and in a specific manner.

In the prosthetic post and cores known in the art, the micro grooves have the capacity to stabilize collagen fibres so that they seem to be directly fixed into them. However, the inventors hereof have found that the fibres are arranged so as to form a ring and remain fixed within the grooves of the threads.

In order for the reader to better understand the invention, an example of embodiment of the same is described here below by way of non-limiting example, with reference to some drawings.

Figure 1a shows a sectional view of an embodiment of a prosthetic post and core with a fully converging protruding portion.

Figure 1b shows a sectional view of an embodiment of a prosthetic post and core whose protruding portion in turn comprises a first cylindrical lower part (α) and a second converging upper part (β).

Figure 2 shows a front view of a dental prosthesis of the prior art with a post and core of the known type with margin or shoulder.

Figure 3 shows a front view of the post and core of Figure 1 fixed to an implant inserted in a bone and having a crown placed on it, wherein the contour of the post and core is highlighted with respect to the other elements so as to show its position within the crown.

Figure 4 shows a front view of two dental prostheses. The left prosthesis corresponds to a known post and core with margin or shoulder and the right prosthesis corresponds to a prosthetic post and core according to the present invention, illustrated schematically (the micro thread is not shown).

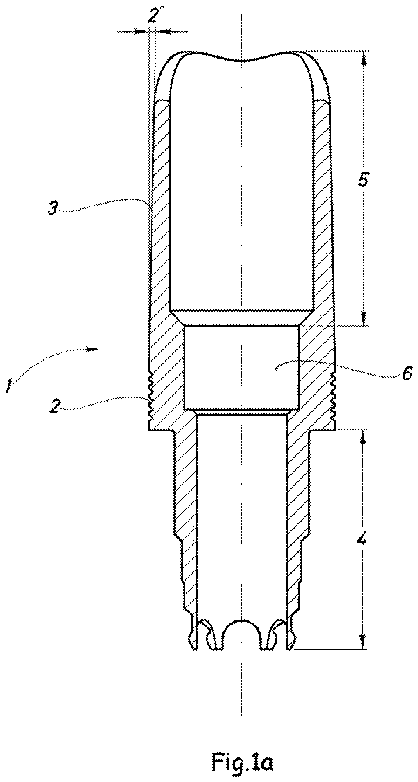

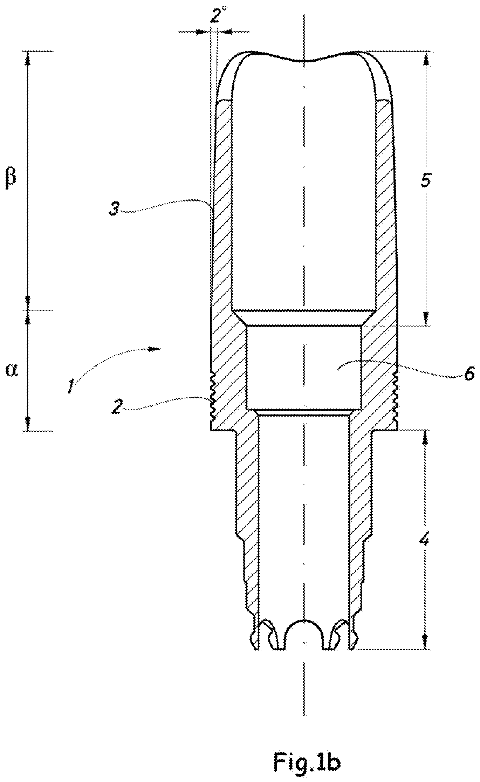

The prosthetic post and core 1 shown in Figures 1a and 1b is hollow and is internally provided with two areas that extend in the direction of its axis of symmetry. On one side there is the duct 5, which is sufficiently wide to allow the head of a screw to pass therethrough. Said screw head remains fixed in the cavity 6 and the rest of the screw is housed in the connection element 4, the portion of the post and core 1 that is inserted in the implant. The sides that surround the cavity 6 are thicker than those of the duct 5, for the purpose of offering increased resistance to loads.

On the other hand, the diameter of the post and core 1 of Figure 1a converges upwards over the entire portion protruding from the implant, that is, starting from the connection element 4. As can be observed, the angle of convergence is equal to 2°. In the part that is closest to the connection element, the post and core 1 is provided with an ascending micrometric thread 2 that starts immediately after the connection element 4.

Alternatively, as shown in Figure 1b, the post and core 1 is provided with a first lower cylindrical part (α), meaning a part with constant diameter, and a second upper part (β) with diameter converging upwards.

Once the post and core 1 has been joined to the implant, the duct 5 must be filled with a resin-based material in order to seal the cavity and prevent the introduction or release of bacteria through the inside of the post and core 1.

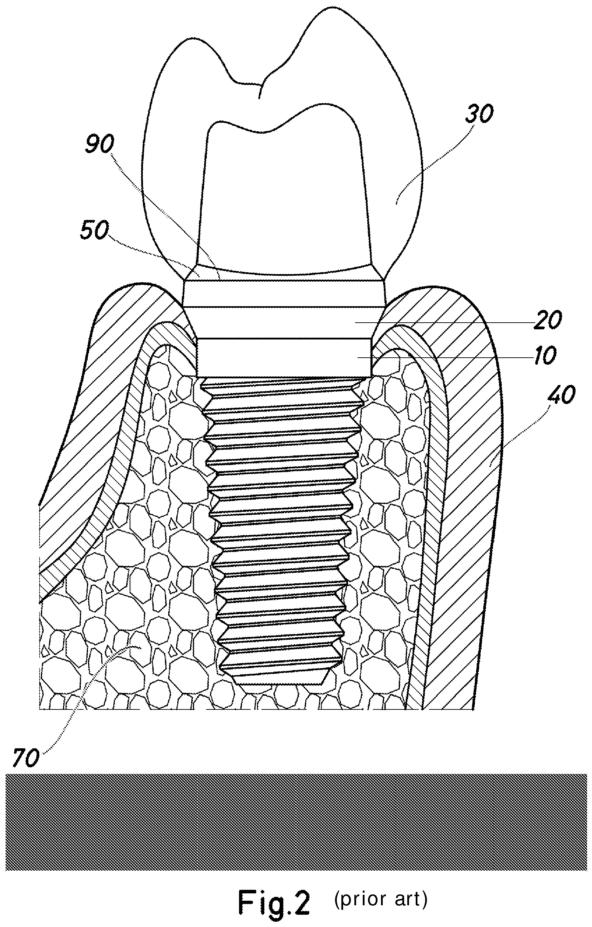

A typical post and core known in the art has a margin or shoulder such as, for example, that indicated by the numeral 50 in Figure 2. The presence of the margin 50 implies that the diameter of the post and core 20 increases immediately after the implant 10, thus defining the margin or shoulder 50. The crown 30 has a part that comes to be fixed into the margin 50 of the post and core 20 and rests on the same, leaving the base of the crown 30 at the same level as the supporting line 90.

In the known post and cores like the one shown in Figure 2, the narrowest area of the post and core 20, in the part located between the implant 10 and the crown 30, is exactly in the contact point between the post and core 20 and the implant 10. This causes the healed tissue to accumulate in this area and leads to the recession of the gum 40 that exposes the post and core 20, as can be seen in Figure 2, thus negatively affecting the aesthetical appearance of the implant and exposing the gum to the proliferation of bacteria.

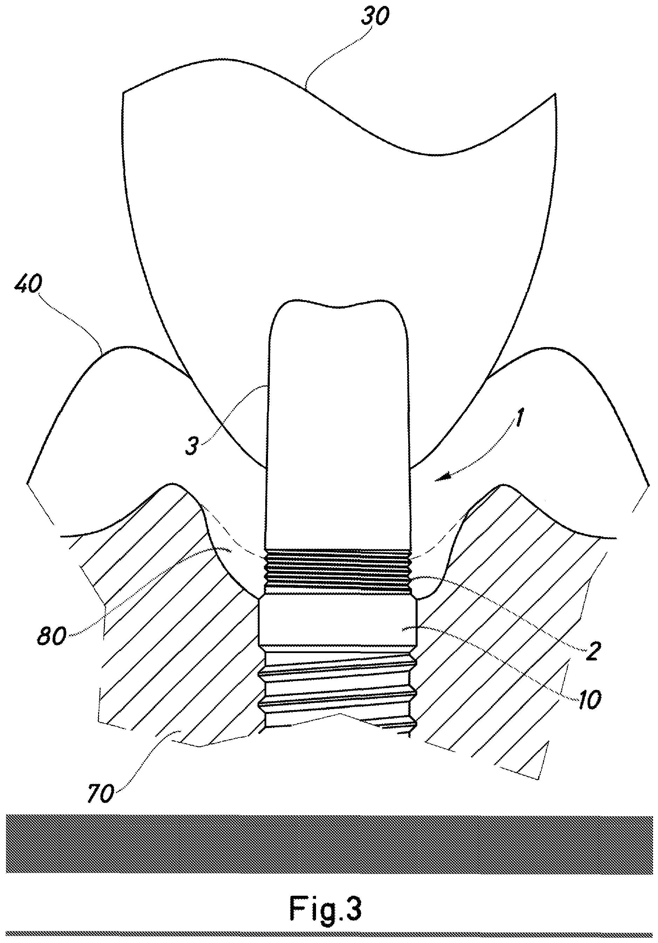

Figure 3 shows the prosthetic post and core 1 that is the subject of the present invention joined to an implant 10 fixed to a bone 70, and with a crown 30 on the same. The area of interest corresponds to the part of the post and core 1 that is situated between the implant 10 and the crown 30. In Figure 3 the contour of the post and core 1 is highlighted in order to show its position within the crown 30.

As can be observed, from the area of the post and core exposed to contact with the gum 40, the smaller diameter is exactly at the limit between the post and core 1 and the crown 30.

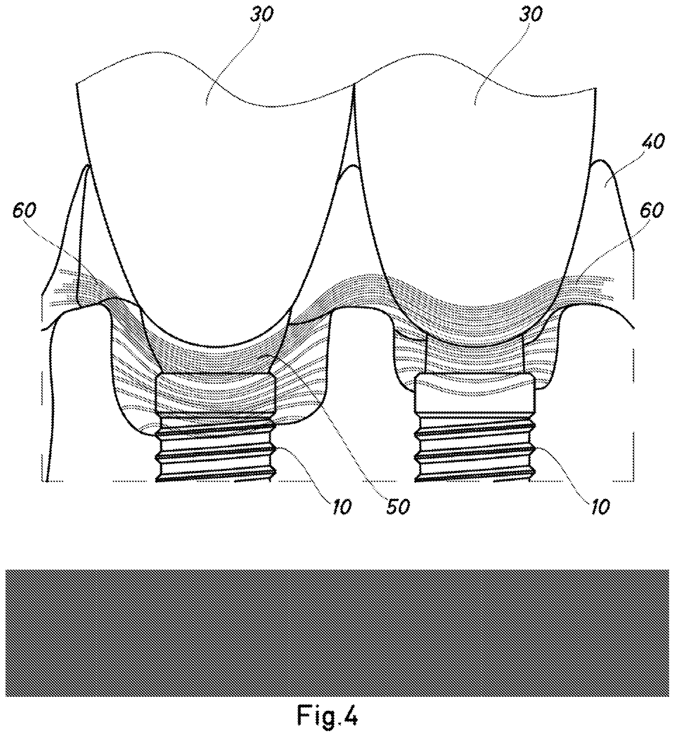

This causes the gum 40 to accumulate in the lower part of the crown 30 during the healing process and consequently, due to the separation of said lower part of the crown 30 from the implant 10, the quantity of tissue between the crown and the implant is larger than in the known post and cores, as shown in Figure 4. Figure 3 shows how the gum 40 covers the post and core 1 completely, differently from that which happens with the post and cores known in the art, as that shown in Figure 2. The numeral 80 indicates the portion of tissue that is fixed to the micrometric thread 2.

The left dental prosthesis in Figure 4 uses a post and core with margin or shoulder 50 like those known in the art. The gum 40 covers a smaller part of the crown 30 and is closer to the implant compared to the prosthesis with the prosthetic post and core that is the subject of the present invention, shown on the right. The effect thanks to which the area with smaller diameter is further from the implant allows a larger quantity of tissue to be present between the implant 10 and the crown 30. This can be observed from the different position of the tissue fibres 60 in the two prostheses. In the case of the known post and core with margin (on the left), the fibres 60 are located in an area closer to the implant and with little contact with the post and core. On the contrary, in the case of the post and core according to the present invention (on the right), the fibres 60 adhere to the entire surface of the post and core and in an area closer to the crown, with more tissue between the crown and the implant compared to the prosthesis illustrated on the left.

## Claims

1. Dental prosthesis of the type comprising a dental implant (10), a post and core (1) and a crown (30), said implant (10) being suited to be fixed to a bone and said post and core (1) being suited to be fixed to said implant (10) by means of a screw can pass through the inside of said post and core (1), said post and core (1) comprising a portion to be inserted into said implant (10) and another portion (3) protruding from said implant (10), wherein said post and core (1) serves as a connection element (4) between said implant (10) and said crown (30), a separation area being provided between the area where the crown (30) is housed in the post and core (1) and the area where the post and core (1) is housed in the implant (10), the diameter of said portion protruding from said implant (10) converging from said implant (10) towards said crown (30), without increases,
**characterized in that** said post and core (1) is provided with an ascending microscopic thread (2) that starts from the part of said portion protruding from the implant (10) that is closest to the implant (10) itself.

2. Dental prosthesis according to claim 1, **characterized in that** the diameter of said portion (3) protruding from said implant (10) comprises a first lower cylindrical part (α) and a second converging part (β) above said first cylindrical part (α).

3. Dental prosthesis according to claim 1, **characterized in that** the diameter of said portion (3) protruding from said implant (10) converges in a continuous manner from said implant (10) towards said crown (30), without increases.

4. Dental prosthesis according to claim 2 or 3, **characterized in that** the diameter of said portion (3) protruding from said implant (10) converges with an angle of convergence included between 1° and 6°.

5. Dental prosthesis according to claim 4, **characterized in that** the diameter of said portion (3) protruding from said implant (10) converges with an angle of convergence equal to 2°.

6. Dental prosthesis according to claim 1, **characterized in that** said crown (30) can be fixed to said post and core (1) through cementation.

7. Dental prosthesis according to claim 1, **characterized in that** said post and core (1) has no margins.

8. Dental prosthesis according to claim 1, **characterized in that** the width of said microscopic thread (2) is included between 4 µm and 100 µm.

9. Dental prosthesis according to claim 8, **characterized in that** the width of said microscopic thread (2) is at least equal to 20 µm.

10. Dental prosthesis according to claim 1, **characterized in that** the depth of said microscopic thread (2) is included between 4 µm and 60 µm.

11. Dental prosthesis according to claim 10, **characterized in that** the depth of said microscopic thread (2) is at least equal to 20 µm.

## Patentansprüche

1. Zahnprothese des Typs, der ein Zahnimplantat (10), einen Stiftaufbau (1) und eine Krone (30) umfasst, wobei das besagte Implantat (10) geeignet ist, an einem Knochen fixiert zu werden und der besagte Stiftaufbau (1) geeignet ist, an dem besagten Implantat (10) fixiert zu werden mittels einer Schraube, die das Innere des besagten Stiftaufbaus (1) passieren kann, wobei der besagte Stiftaufbau (1) einen Abschnitt umfasst, der in das besagte Implantat (10) eingesetzt wird, und einen anderen Abschnitt (3), der aus dem besagten Implantat (10) herausragt, wobei der besagte Stiftaufbau (1) als Verbindungselement (4) zwischen dem besagten Implantat (10) und der besagten Krone (30) dient, und zwischen dem Bereich, in dem die Krone (30) in dem Stiftaufbau (1) aufgenommen wird, und dem Bereich, in dem der Stiftaufbau (1) in dem Implantat (10) aufgenommen wird, ein Trennbereich vorhanden ist, und der Durchmesser des besagten, aus dem besagten Implantat (10) herausragenden Abschnitts ohne Zunahmen aus dem besagten Implantat (10) zu der besagten Krone (30) hin konvergiert,
**dadurch gekennzeichnet, dass** der besagte Stiftaufbau (1) mit einem aufsteigenden mikroskopischen Gewinde (2) versehen ist, das an dem Teil des besagten, aus dem Implantat (10) herausragenden Abschnitt beginnt, der dem Implantat (10) selbst am nächsten ist.

2. Zahnprothese nach Patentanspruch 1, **dadurch gekennzeichnet, dass** der Durchmesser des besagten, aus dem besagten Implantat (10) herausragenden Abschnitts (3) einen ersten unteren, zylindrischen Teil (α) und einen zweiten, konvergierenden Teil (β) oberhalb des besagten ersten zylindrischen Teils (α) umfasst.

3. Zahnprothese nach Patentanspruch 1, **dadurch gekennzeichnet, dass** der Durchmesser des besagten, aus dem besagten Implantat (10) herausragenden Abschnitts (3) stufenlos ohne Zunahmen aus dem besagten Implantat (10) zu der besagten Krone (30) hin konvergiert.

4. Zahnprothese nach Patentanspruch 2 oder 3, **dadurch gekennzeichnet, dass** der Durchmesser des besagten, aus dem besagten Implantat (10) herausragenden Abschnitts (3) mit einem Konvergenzwinkel zwischen 1° und 6° konvergiert.

5. Zahnprothese nach Patentanspruch 4, **dadurch gekennzeichnet, dass** der Durchmesser des besagten, aus dem besagten Implantat (10) herausragenden Abschnitts (3) mit einem Konvergenzwinkel von 2° konvergiert.

6. Zahnprothese nach Patentanspruch 1, **dadurch gekennzeichnet, dass** die besagte Krone (30) durch Zementierung an dem besagten Stiftaufbau (1) fixiert werden kann.

7. Zahnprothese nach Patentanspruch 1, **dadurch gekennzeichnet, dass** der besagte Stiftaufbau (1) keine Ränder hat.

8. Zahnprothese nach Patentanspruch 1, **dadurch gekennzeichnet, dass** die Breite des besagten mikroskopischen Gewindes (2) zwischen 4 µm und 100 µm liegt.

9. Zahnprothese nach Patentanspruch 8, **dadurch gekennzeichnet, dass** die Breite des besagten mikroskopischen Gewindes (2) wenigstens 20 µm beträgt.

10. Zahnprothese nach Patentanspruch 1, **dadurch gekennzeichnet, dass** die Tiefe des besagten mikroskopischen Gewindes (2) zwischen 4 µm und 60 µm liegt.

11. Zahnprothese nach Patentanspruch 10, **dadurch gekennzeichnet, dass** die Tiefe des besagten mikroskopischen Gewindes (2) wenigstens 20 µm beträgt.

## Revendications

1. Prothèse dentaire du type comprenant un implant dentaire (10), un faux moignon (1) et une couronne (30), ledit implant (10) étant apte à être fixé sur un os et ledit faux moignon (1) étant aptes à être fixé sur ledit implant (10) au moyen d'une vis qui peut passer à travers l'intérieur dudit faux moignon (1), ledit faux moignon (1) comprenant une portion à insérer dans ledit implant (10) et une autre portion (3) saillant dudit implant (10), où ledit faux moignon (1) agit comme élément de raccordement (4) entre ledit implant (10) et ladite couronne (30), une zone de séparation étant prévue entre la zone de logement de la couronne (30) dans le faux moignon (1) et la zone de logement du faux moignon dans l'implant (10), le diamètre de ladite portion saillant dudit implant (10) convergeant dudit implant (10) vers ladite couronne (30), sans aucune augmentation, **caractérisée en ce que** ledit faux moignon (1) est doté d'un filetage microscopique ascendant (2) qui commence de la partie de ladite portion saillant de l'implant (10) qui est la plus proche de l'implant (10).

2. Prothèse dentaire selon la revendication 1, **caractérisée en ce que** le diamètre de ladite portion (3) saillant dudit implant (10) comprend une première partie cylindrique inférieure (α) et une deuxième partie convergeant (β), supérieure à ladite première partie cylindrique (α).

3. Prothèse dentaire selon la revendication 1, **caractérisée en ce que** le diamètre de ladite portion (3) saillant dudit implant (10) converge de manière continuelle dudit implant (10) vers ladite couronne (30), sans aucune augmentation.

4. Prothèse dentaire selon la revendication 2 ou 3, **caractérisée en ce que** le diamètre de ladite portion (3) saillant dudit implant (10) converge avec un angle de convergence compris entre 1° et 6°.

5. Prothèse dentaire selon la revendication 4, **caractérisée en ce que** le diamètre de ladite portion (3) saillant dudit implant (10) converge avec un angle de convergence égal à 2°.

6. Prothèse dentaire selon la revendication 1, **caractérisée en ce que** ladite couronne (30) peut être fixée audit faux moignon (1) par cémentation.

7. Prothèse dentaire selon la revendication 1, **caractérisée en ce que** ledit faux moignon (1) ne présente pas de bordures.

8. Prothèse dentaire selon la revendication 1, **caractérisée en ce que** la largeur dudit filetage microscopique (2) est comprise entre 4 µm et 100 µm.

9. Prothèse dentaire selon la revendication 8, **caractérisée en ce que** la largeur dudit filet microscopique (2) est au moins égal à 20 µm.

10. Prothèse dentaire selon la revendication 1, **caractérisée en ce que** la profondeur dudit filetage microscopique (2) est comprise entre 4 µm et 60 µm.

11. Prothèse dentaire selon la revendication 10, **caractérisée en ce que** la profondeur dudit filetage microscopique (2) est au moins égale à 20 µm.
